# EUROPÄISCHE PATENTSCHRIFT

(11) **EP 1 095 826 B1**
(45) Veröffentlichungstag und Bekanntmachung des Hinweises auf die Patenterteilung: **07.12.2005**
(21) Anmeldenummer: 00122459.1
(22) Anmeldetag: 13.10.2000
(51) Int. Cl.: B60R 22/20

(54) **Vorrichtung zur Höhenverstellung einer Sicherheitsgurtumlenk- oder -verankerungseinrichtung in einem Kraftfahrzeug**
Motor vehicle safety belt guide loop or anchor height adjusting device
Dispositif de réglage en hauteur d'un renvoi supérieur ou d'une attache de ceinture de sécurité de véhicule automobile

(30) Priorität: 25.10.1999 DE 19951293
(43) Veröffentlichungstag der Anmeldung: 02.05.2001
(73) Patentinhaber: KEY SAFETY SYSTEMS, INC., Sterling Heights, Michigan 48314 (US)
(72) Erfinder: Specht, Martin, 82340 Feldafing (DE); Dollinger, Rainer, 82131 Gauting-Unterbrunn (DE)
(74) Vertreter: Nöth, Heinz

(56) Entgegenhaltungen:
- DE-A- 3 007 986
- DE-U- 29 904 925
- US-A- 5 265 908
- ANONYMOUS: "Seat belt height adjuster for use with a belt webbing pretensioner" RESEARCH DISCLOSURE, KENNETH MASON PUBLICATIONS, HAMPSHIRE, GB, Bd. 416, Nr. 19, Dezember 1998 (1998-12), XP007123607 ISSN: 0374-4353
- PATENT ABSTRACTS OF JAPAN Bd. 1996, Nr. 10, 31. Oktober 1996 (1996-10-31) -& JP 08 142795 A (TOYOTA TEKKO KK), 4. Juni 1996 (1996-06-04)

## Beschreibung

Die Erfindung betrifft eine Vorrichtung nach dem Oberbegriff des Patentanspruches 1.

### [Stand der Technik]

Eine gattungsgemäße Vorrichtung ist aus der DE 30 07 986 A1 bekannt. Die bekannte Vorrichtung besitzt eine Führungsschiene, an deren Grundfläche zwei längsverlaufende Seitenschenkel vorgesehen sind. Die längsverlaufenden Enden der Seitenschenkel sind umgebogen und parallel zu den Seitenschenkeln verlaufend auf die Grundfläche zugerichtet. Die so umgebogenen Enden bilden Sperrleisten, welche im wesentlichen senkrecht zur Grundfläche verlaufende geradlinige Sperrflächen, innerhalb sägezahnförmiger Ausnehmungen aufweisen. Einer jeweiligen senkrecht ausgerichteten Sperrfläche ist eine geneigte Kante und eine im wesentlichen parallel zur Grundfläche verlaufende Kante zugeordnet. Zwischen den Sperrleisten wird ein Längsschlitz gebildet, entlang welchem ein Verstellteil, an dem die Umlenk- bzw. Verankerungseinrichtung befestigt ist, zur Höhenverstellung verschiebbar ist. Am Verstellteil ist eine Verriegelungseinrichtung vorgesehen, die ein T-förmiges Verriegelungselement aufweist, dessen seitliche Fortsätze einen Sperriegel bilden, der mit Vorspannung in der jeweiligen Höhenposition eine lösbare Verriegelungsstellung einnimmt. In dieser Position können zumindest bei vom Sicherheitsgurt ausgehender Belastung am Sperriegel eben ausgebildete Anschlagflächen mit den Sperrflächen in Anlage kommen. Mit Hilfe einer Entriegelungseinrichtung kann der Verriegelungszustand gelöst werden und die Anschlagflächen des Verriegelungselementes werden an den Sperrflächen vorbei bewegt und in eine neue Höhenposition gebracht.

Aus der EP 0 086 633 ist ein Höhenversteller für eine Sicherheitsgurtumlenkeinrichtung bzw. -verankerungseinrichtung bekannt, bei welcher in den beiden Seitenschenkeln der Führungsschiene in entsprechenden Höhenpositionen Ausnehmungen in der Fläche der Seitenschenkel vorgesehen sind, in die am Verstellteil vorgesehene nach außen spreizbare Sperriegel in der jeweiligen Höhenposition in Eingriff kommen.

Bei den bekannten Vorrichtungen entstehen insbesondere bei einem Unfall an den Stellen, an denen das Verriegelungselement an der Führungsschiene anliegt, hohe Kräfte. Es ist daher erforderlich, für die Führungsschiene eine relativ hohe Materialstärke zu wählen, um dieser, eine ausreichende Formsteifigkeit zu geben. Aus der DE 299 03 785 U1 ist es hierzu bekannt, zwei Verriegelungsbolzen in parallelem Abstand zueinander anzuordnen, welche mit zwei Paaren von Sperrflächen an den Sperrleisten in Eingriff kommen können. Hierdurch wird eine Kraftverteilung auf mehrere Stellen der Führungsschiene erreicht.

### [Aufgabe der Erfindung]

Aufgabe der Erfindung ist es, eine Vorrichtung der eingangs genannten Art zu schaffen, bei welcher mit verringertem Aufwand eine Krafteinleitung an mehreren Stellen der Führungsschiene erreicht wird.

Diese Aufgabe wird durch die kennzeichnenden Merkmale des Patentanspruches 1 gelöst.

Bei der Erfindung sind an den Seitenschenkeln nach innen versetzte weitere geradlinige Sperrflächen vorgesehen, welche beispielsweise durch Materialverschiebungen der Seitenschenkel, insbesondere Materialeindrückungen gebildet werden. Diese verlaufen parallel zu den Sperrflächen an den Sperrleisten und befinden sich in den gleichen Höhenpositionen. Somit kommen zusätzliche ebene Anschlagflächen des Verriegelungselementes insbesondere bei Belastung mit den an den Seitenschenkeln vorgesehenen Sperrflächen in Anlage. Hierdurch wird mit Hilfe eines einzelnen bevorzugt als Bolzen ausgebildeten Verriegelungselementes erreicht, daß an vier Stellen eine Krafteinleitung in die Führungsschiene erreicht wird. Hierdurch ist es möglich, mit verringertem Aufwand, d. h. mit nur einem Verriegelungselement an vier Stellen der Führungsschiene, die vom Sicherheitsgurt über das Verstellelement kommenden Kräfte, in die Führungsschiene einzuleiten. Obgleich nur ein Verriegelungselement erforderlich ist, läßt sich eine Verringerung der Materialstärke der Führungsschiene erreichen.

In bevorzugter Weise ist das Verriegelungselement als Verriegelungsbolzen ausgebildet, der einen im wesentlichen quadratischen oder rechteckigen Querschnitt aufweist. Die ebene Fläche, an welcher die Anschlagflächen gebildet werden, besitzt etwa die gleiche Höhe, wie die Sperrflächen an den Sperrleisten und den Seitenschenkeln der Führungsschiene.

In bevorzugter Weise ist am Verriegelungsbolzen ein Distanzstück vorgesehen, das sich zumindest zwischen den jeweiligen beiden innenliegenden Flächenteilen der Sperrleisten, welche den Sperrflächen benachbart sind, in der jeweiligen Höhenposition erstreckt. Bei hohen Kräften wird hierdurch ein sicherer Eingriff des Verriegelungselementes, insbesondere Verriegelungsbolzen in die Sperrflächen gewährleistet, da eine Verformung, insbesondere Wegkippen nach innen der benachbarten Flächenteile der Sperrleisten durch das Distanzstück verhindert wird. Das Distanzstück kann einstückig mit dem Verriegelungselement ausgebildet sein oder beispielsweise durch Verpressen am Verriegelungselement befestigt sein. In bevorzugter Weise besitzt das Distanzstück eine U-Form und umfaßt das als Verriegelungsbolzen ausgebildete Verriegelungselement.

Das als Verriegelungsbolzen ausgebildete Verriegelungselement ist in bevorzugter Weise, an einem zwei Lagerschenkel aufweisenden Lagerteil beweglich gelagert. Die Lagerschenkel des Lagerteils erstrecken sich zwischen den Seitenschenkeln und den Sperrleisten der Führungsschiene. Zur beweglichen Lagerung des Verriegelungsbolzens sind in den beiden Lagerschenkeln Langlöcher vorgesehen, in denen der Verriegelungsbolzen zwischen zwei Endstellungen, die der Verriegelungsstellung und der Entriegelungsstellung entsprechen, bewegt werden kann. Die Langlöcher besitzen bevorzugt einen gebogenen Verlauf, so daß eine Schwenkbewegung zur Steuerung der Bewegung des Verriegelungsbolzens zwischen der Verriegelungs- und der Entriegelungsposition verwendet werden kann.

In bevorzugter Weise können an den zwischen den Seitenschenkeln und den Sperrleisten liegenden umgebogenen Schienenteilen Vorpositionierstellen vorgesehen sein, durch die gewährleistet ist, daß das Verstellteil in der jeweiligen Höhenposition so gehalten wird, daß die Anschlagflächen am Verriegelungselement in einem geringen Abstand zu den Sperrflächen an der Führungsschiene gehalten werden. Hierzu können entsprechende Ausnehmungen an den Schienenteilen vorgesehen sein, in die beispielsweise als Rollkörper ausgebildete Eingriffsteile, die mit Vorspannung am Verstellteil gelagert sind, in Eingriff gebracht werden.

### [Beispiele]

Anhand der Figuren wird an einem Ausführungsbeispiel die Erfindung noch näher erläutert. Es zeigt:
- Figur 1: eine Draufsicht auf das Ausführungsbeispiel;
- Figur 2: eine schnittbildliche Darstellung entlang einer Schnittlinie B-B in der Figur 1;
- Figur 3: eine schnittbildliche Darstellung entlang einer Schnittlinie A-A in der Figur 1
- Figur 4: eine schnittbildliche Darstellung entlang einer Schnittlinie C-C in Figur 2; und
- Figur 5: eine perspektivische Explosionsdarstellung der Einzelteile des Ausführungsbeispiels.

Die in den Figuren dargestellte Vorrichtung, welche zur Höhenverstellung einer Sicherheitsgurtumlenk- oder -verankerungseinrichtung in einem Fahrzeug dient, besitzt eine Führungsschiene 1. An der Führungsschiene 1 sind an einer Grundfläche 2 zwei längsverlaufende Seitenschenkel 3, 4 vorgesehen. Die freien längsverlaufenden Enden der Seitenschenkel 3 sind umgebogen und bilden etwa aufeinander zu verlaufende nach innen gerichtete Schienenteile 5, 6 sowie weitere in Richtung auf die Grundfläche 2, gebogene Schienenteile, welche parallel zu den Seitenschenkeln 3, 4 verlaufende Sperrleisten 7, 8 darstellen. An den unteren Kanten der Sperrleisten 7, 8 sind sägezahnförmige Ausnehmungen vorgesehen, welche geradlinig verlaufende Sperrflächen 11 aufweisen, die im wesentlichen senkrecht zur Grundfläche 2 verlaufen. In der jeweiligen Ausnehmung, in welcher die Sperrfläche 11 gebildet wird, ist ferner eine schräge Kante 26 und eine im wesentlichen parallel zur Grundfläche 2 verlaufende Kante 27 vorgesehen.

Die parallel zu den Seitenschenkeln 3, 4 in einem Abstand innen verlaufenden Sperrleisten 7, 8 erstrecken sich im wesentlichen senkrecht zur Grundfläche 2. Zwischen den Sperrleisten 7, 8 wird ein Längsschlitz 9 gebildet. Entlang dem Längsschlitz 9 ist ein Verstellteil 10 verschiebbar an der Führungsschiene 1 gelagert. Am Verstellteil 10 ist eine Verriegelungseinrichtung 12 vorgesehen, welche in einer jeweiligen den Sperrflächen 11 entsprechenden Höhenposition eine Verriegelungsstellung einnehmen kann. Die im einzelnen noch zu erläuternde Verriegelungseinrichtung 12 kann mit Hilfe einer Entriegelungseinrichtung 14 entriegelt werden, so daß das Verstellteil zur Höhenverstellung entlang der Führungsschiene 1 verschoben werden kann.

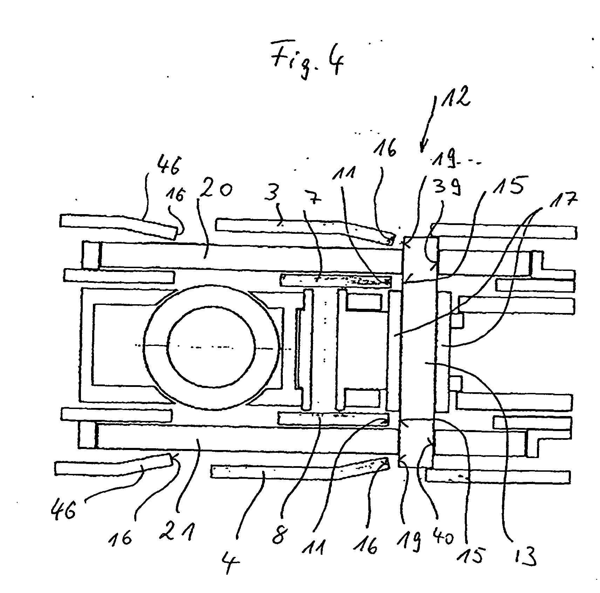

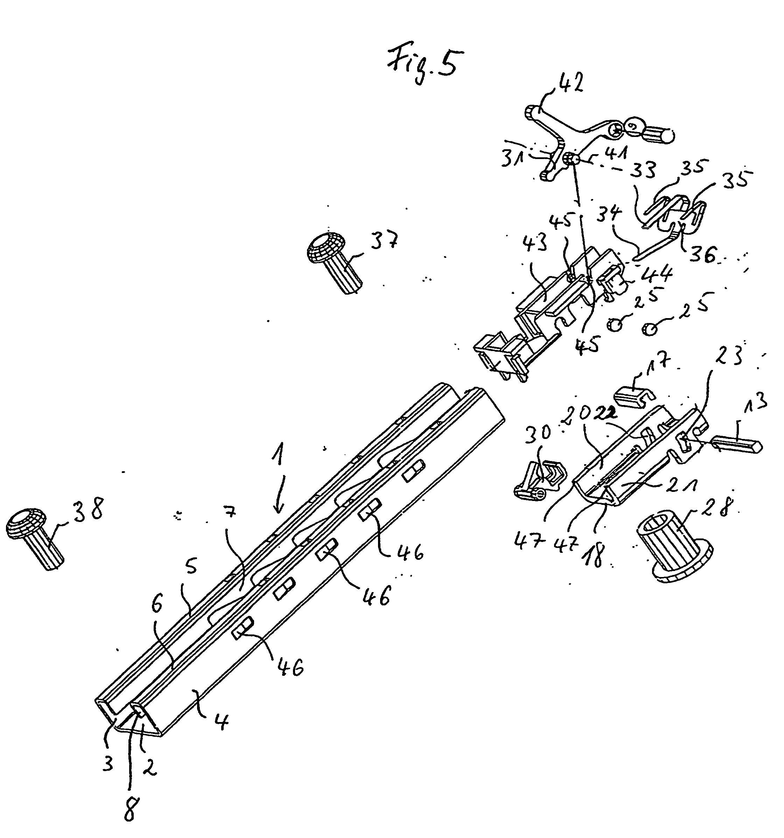

Am Verstellteil 1 ist eine Befestigungsstelle 28 für eine nicht näher dargestellte Sicherheitsgurtumlenkeinrichtung, beispielsweise einen Umlenkbeschlag oder eine Verankerungseinrichtung für den Sicherheitsgurt vorgesehen. Die Befestigungsstelle 28, beispielsweise in Form einer Gewindebuchse ist an einem lastaufnehmenden Lagerteil 18 des Verstellteiles 10, beispielsweise durch Verschweißen befestigt. Dieses lastaufnehmende Lagerteil 18, welches aus Metall gebildet wird, besitzt wie aus der Figur 5 zu ersehen ist, einen U-förmigen Querschnitt, so daß am Lagerteil 18 Lagerschenkel 20 und 21 gebildet sind. Im zusammengebauten Zustand erstrecken sich die beiden Lagerschenkel 20 und 21 zwischen den Sperrleisten 7, 8 und den Seitenschenkeln 3, 4 der Führungsschiene 1 (Figur 4).

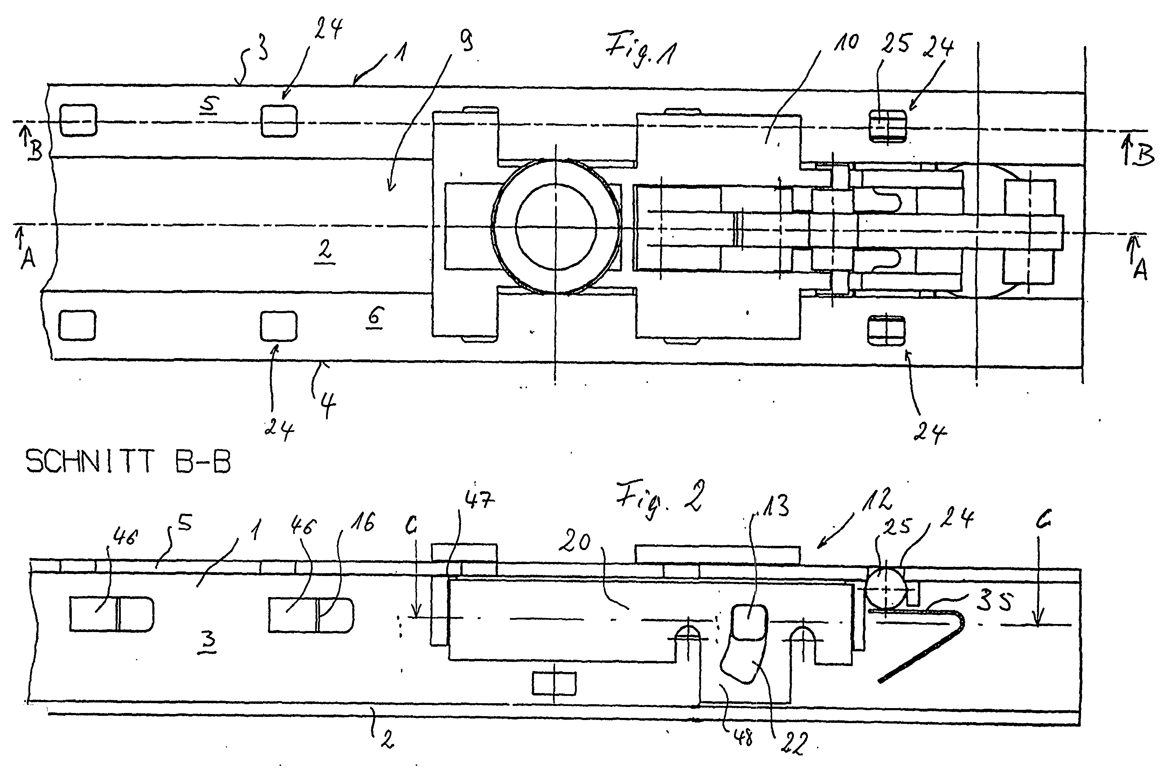

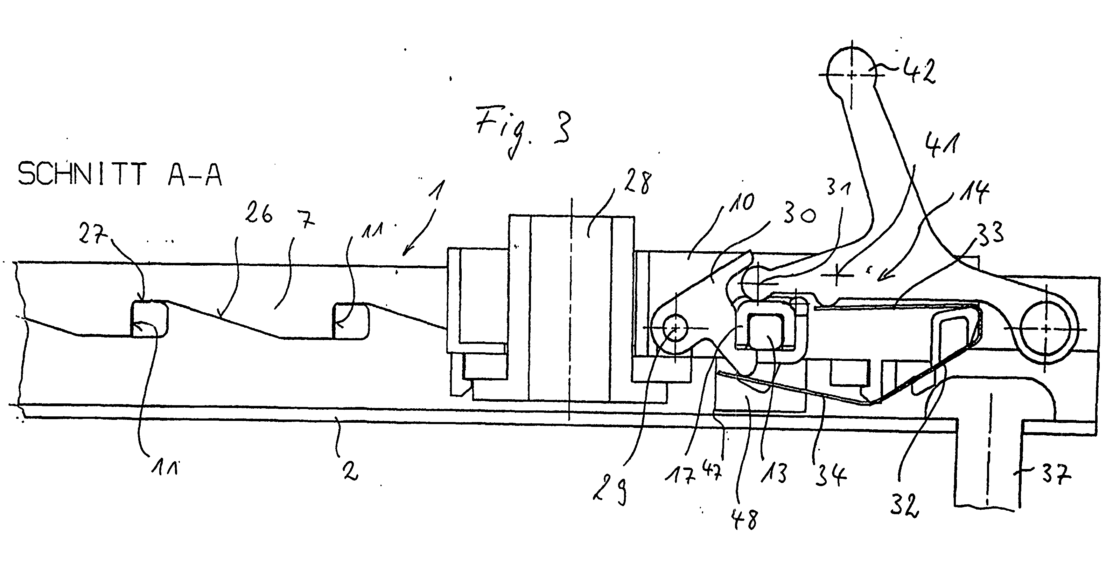

Die wesentlichen Teile der Verriegelungseinrichtung 12, insbesondere die lastaufnehmenden Teile sind an dem lastaufnehmenden Lagerteil 18 vorgesehen. Hierzu besitzt die Verriegelungseinrichtung 12 als Verriegelungselement einen Verriegelungsbolzen 13, welcher beim dargestellten Ausführungsbeispiel einen im wesentlichen quadratischen Querschnitt aufweist. Gegebenenfalls kann auch ein rechteckiger Querschnitt verwendet werden. Die Längskanten sind abgerundet. Der Verriegelungsbolzen 13 erstreckt sich quer zur Längsausdehnung der Führungsschiene 1 und ist in Langlöchern 22 und 23, welche in den Lagerschenkeln 20 und 21 vorgesehen sind, am lastaufnehmenden Lagerteil 18 geführt. Die Breite der Langlöcher 22 und 23 ist an den Querschnitt des Verriegelungsbolzens 13 angepaßt, wie insbesondere aus der Figur 2 zu ersehen ist. Die Langlöcher 22 und 23 können etwa Kreisbogenform aufweisen für eine angepaßte Führung um eine Schwenkachse 29 eines Führungshebels 30. Der Führungshebel 30 ist mit seiner Schwenkachse 29 schwenkbar am Lagerteil 18 gelagert. Am Führungshebel 30 und am Verriegelungsbolzen 13 greift eine Vorspannfeder 32 an, welche zwei Federschenkel 33 und 34 aufweist. Der Federschenkel 34 drückt mit seiner Vorspannkraft sowohl den Führungshebel 30 als auch den Verriegelungsbolzen 13 in die in den Figuren 2 und 3 dargestellte Verriegelungsposition. In dieser Verriegelungsposition liegt der Verriegelungsbolzen 13 am jeweiligen oberen Ende der Langlöcher 22 und 23 an. In dieser Verriegelungsposition befindet sich das Verstellteil 10 in einer bestimmten Höhenposition. Hierbei liegen, wie aus der Figur 4 zu ersehen ist, innere Anschlagflächen 15 am Verriegelungsbolzen 13 den Sperrflächen 11 an den Sperrleisten 7 und 8 gegenüber.

Der Verriegelungsbolzen 13 steht mit seinen Enden über die Seitenflächen der Lagerschenkel 20 und 21 über, so daß äußere, zusätzliche Anschlagflächen 19 am Verriegelungsbolzen zusätzlichen Sperrflächen 16, welche an den beiden Seitenschenkeln 3 und 4 gebildet sind, gegenüberliegen. Wie aus den Figuren 2, 4 und 5 zu ersehen ist, werden die Sperrflächen 16 an nach innen verlagerten Wandteilen der Seitenschenkel 3 gebildet. Die Sperrflächen 16 verlaufen parallel zu den Sperrflächen 11 an den beiden Sperrleisten 7 und 8 und befinden sich in der gleichen Höhenposition, wie aus der Figur 4 zu ersehen ist. Die Länge der jeweiligen Sperrfläche 11 und 16 entspricht etwa der jeweiligen Länge der Anschlagflächen 15 und 19, am Verriegelungsbolzen 13.

Beim dargestellten Ausführungsbeispiel werden wie aus Figur 4 zu ersehen ist, die Anschlagflächen 15 und 19 am Verriegelungsbolzen 13, in einem bestimmten Abstand von den Sperrflächen 11 und 16 an der Führungsschiene 1, in der jeweiligen Höhenposition gehalten. Dies wird durch eine Vorpositioniereinrichtung erreicht, welche beim dargestellten Ausführungsbeispiel in Form von Ausnehmungen 24 Vorpositionierstellen an der Führungsschiene 1 aufweist, in die am Verstellteil 10 mit Vorspannung gelagerte Eingriffsteile 25, beispielsweise in Form von Rollkörpern eingreifen (Figuren 1 und 2). Die Vorpositionierstellen 24 werden an den im wesentlichen parallel zur Grundfläche 2 verlaufenden umgebogenen Schienenteilen 5 und 6 gebildet. Mit Hilfe der Vorspannkraft einer Vorpositionierfeder 35 (Figur 2) wird das als Rollkörper ausgebildete Eingriffsteil 25 in die Ausnehmung 24 gedrückt. Wie aus der Figur 5 zu ersehen ist, können die Vorspannfeder 32 und die Vorpositionierfeder 35 einstückig von einem Federbauteil 36 gebildet werden. An beiden Seiten der Führungsschiene 1 werden für die Eingriffsteile 25 an das Federbauteil 36 angeformte Federschenkel, für die Bildung der Vorpositionfedern 35 vorgesehen.

Sobald eine erhöhte Belastung ausgehend vom Sicherheitsgurt über die Sicherheitsgurtumlenkeinrichtung bzw. -verankerungseinrichtung eingeleitet wird, verschiebt sich das Verstellteil 10 durch die dabei auftretende Zugwirkung so, daß die Anschlagflächen 15 und 19 an die Sperrflächen 11 und 16 angedrückt werden. Dabei werden die zur Wirkung kommenden Kräfte über vier Anlagestellen in die am Fahrzeugaufbau befestigte Führungsschiene 1 eingeleitet. Zur Befestigung der Führungsschiene 1 dienen in herkömmlicher Weise Befestigungsbolzen 37 und 38 (Figur 5).

Wie aus der Figur 4 zu ersehen ist, erfolgt die Abstützung außerhalb und innerhalb der beiden Lagerschenkel 20 und 21 des lastaufnehmenden Lagerteils 18. Die vom Sicherheitsgurt kommenden Zugkräfte werden an Anschlagflächen 39 und 40 an der Innenfläche der beiden Langlöcher 22 und 23 auf daran anliegende Anschlagflächen am Verriegelungsbolzen 13, im wesentlichen in Längsrichtung der Führungsschiene 1 übertragen. Die Kräfte werden mit geringem Versatz gegenüber den Anschlagflächen 39 und 40 am lastaufnehmenden Teil 18 über die an der entgegengesetzt liegenden Fläche des Verriegelungsbolzens 13 liegenden Anschlagflächen 15 und 19, auf die Sperrflächen 11 und 16 an der Führungsschiene 1 übertragen. Die an den Anlageflächen zur Wirkung kommenden Kräfte (Zugkräfte) haben dabei im wesentlichen eine senkrecht zu diesen Flächen liegende Wirkrichtung, die mit der Längsrichtung der Führungsschiene 1 übereinstimmt.

Die Sperrflächen 16 befinden sich an den freien Kanten von einwärts gebogenen Blechteilen 46 der Seitenschenkel 3 und 4, der Führungsschiene 1. Der Winkel der Biegung ist äußerst spitz und beträgt ca. 15°. Hierdurch ist eine einwandfreie Kraft-Einleitung in das Wandmaterial der Seitenschenkel 3 und 4 gewährleistet.

Die jeweilige Höhenpositionierung des Verstellteils 10 kann auch ohne die oben erläuterte Vorpositionierung erfolgen, wobei dann die Anschlagflächen 15 und 19 am Verriegelungsbolzen 13 an den Sperrflächen 11 und 16 der Führungsschiene 1 anliegen.

Beim dargestellten Ausführungsbeispiel ist am Verriegelungsbolzen 13 ein Distanzstück 17 beispielsweise durch Verpressen befestigt. Es ist auch möglich, dieses Distanzstück 17 einstückig mit dem Verriegelungsbolzen 13 auszubilden. Wie insbesondere aus der Figur 4 zu ersehen ist, erstreckt sich das Distanzstück 17 zwischen den beiden Innenseiten der Sperrleisten 7 und 8. Wenn die Anschlagflächen 15 am Verriegelungsbolzen, beispielsweise zur Krafteinleitung in die Führungsschiene 1 an den Sperrflächen 11 anliegen, werden die den Sperrflächen 11 benachbarten Materialteile der Sperrleisten 7 und 8, nach innen durch das Distanzstück 17 abgestützt. Hierdurch wird die Gefahr des Wegkippens der Sägezähne bzw. der Sperrflächen 11 vermieden. Nach außen hin sind die Sperrflächen 11 durch die Lagerschenkel 20 und 21 des Lagerteils 18 abgestützt. Somit wird eine einwandfreie Krafteinleitung an den Sperrflächen 16, in Zusammenwirkung mit dem Distanzstück 17 gewährleistet.

Um den Verriegelungsbolzen 13 in die Entriegelungsposition zu bringen, wird ein Betätigungshebel 31 um eine Schwenkachse 41 gegen die Kraft des Federschenkels 33 in der in der Figur 3 dargestellten Verriegelungsstellung nach unten gedrückt. Hierbei wird der Verriegelungsbolzen 13 aus der in den Figuren 2 und 3 dargestellten Verriegelungsposition zum anderen Ende der Langlöcher 22 und 23 hin (in den Figuren 2 und 3 nach unten) bewegt. Dabei werden die Anschlagflächen 15 und 19 am Verriegelungsbolzen 13 aus dem Bereich der Sperrflächen 11 und 16 bewegt. Der Verriegelungsbolzen 13 kann an den jeweiligen Sperrflächen 11 und 16 in die nächste Höhenposition vorbeibewegt werden. Diese Verstellbewegung erfolgt zu jeweils niedrigeren Höhenpostionen (in den Figuren nach links). Bei einer Verstellung zu einer höheren Höhenposition (in den Figuren nach rechts), genügt es auf ein Griffteil 42 des Betätigungshebels 31, einen entsprechenden Druck auszuüben, so daß das Verstellteil 10 nach oben hin bewegt wird. Der Verriegelungsbolzen gleitet dann entlang der schrägen Kante 26, welche als Abweiskante wirkt und den Verriegelungsbolzen 13 selbsttätig in die Entriegelungsposition, gegen die Kraft der Vorspannfeder 32 drückt. Aufgrund der Kraft der Vorspannfeder 32, gelangt der Verriegelungsbolzen selbsttätig wieder in seine Verriegelungsposition.

Zur Erleichterung der Verstellbewegung kann das Verstellteil 10 ein Gleitstück 43, insbesondere aus Kunststoff aufweisen. Diese Gleitstück 43 ist mit Formschluß, mit dem lastaufnehmenden Lagerteil 18 verbunden. An diesem Gleitstück 43 können in entsprechenden Ansatzstücken 44, die als Rollkörper ausgebildeten Eingriffsteile 25 der Vorpositioniereinrichtung gelagert sein. Auch der Betätigungshebel 31 kann an dem Gleitstück 43 durch Verklippsen von angeformten Lagerstummeln in Ausnehmungen 45 des Gleitstücks 43 zur Bildung der Schwenkachse 41 gelagert sein (Figur 5).

Die Langlöcher 22, 23 können im Bereich von Blechschenkeln 48 vorgesehen sein. Die Blechschenkel 48 besitzen eine sich über das U-Profil des Lagerteils 18 hinaus erstreckende Ausdehnung. Sie erstrecken sich insbesondere über das Bodenteil des U-Profils des Lagerteils 18 hinaus, wie es aus den Figuren 2 und 5 zu ersehen ist. In bevorzugter Weise ist vom Verstellteil 10 zumindest das lastaufnehmende Lagerteil 18 bei hoher vom Sicherheitsgurt ausgehender Zugbelastung, insbesondere bei einem Unfall, gegenüber der Führungsschiene 1 um eine quer zur Längsrichtung der Führungsschiene 1 im Bereich des Verriegelungsbolzens 13 verlaufende Achse kippbar.Bei hoher Zugbelastung, welche über die Befestigungsstelle 28 auf das Lagerteil 18 übertragen wird, wirkt ein Moment, welches zum Verkippen des Lagerteils 18 gegenüber der Führungsschiene 1 führt. Dabei graben sich insbesondere die vorderen oben (in Fig. 2 und 5) liegenden Kanten 47 des Lagerteils 18 in die umgebogenen Schienenteile 5, 6 ,welche im wesentlichen parallel zur Grundfläche 2 verlaufen, ein. Es wird hierdurch eine zusätzliche Abstützung bei überaus hohen Zugkräften erreicht. Wie aus der Figur 3 zu ersehen ist, befindet sich die Befestigungsstelle 28 im eingebauten Zustand des Höhenverstellers unterhalb der Kippachse, welche im Bereich des Verrieglungsbolzens 13 gebildet wird. Im eingebauten Zustand liegen die Kanten 47 unterhalb der Befestigungsstelle 28.

### [Bezugszeichenliste]

- 1: Führungsschiene
- 2: Grundfläche
- 3: Seitenschenkel
- 4: Seitenschenkel
- 5: umgebogenes Schienenteil
- 6: umgebogenes Schienenteil
- 7: Sperrleiste
- 8: Sperrleiste
- 9: Längsschlitz
- 10: Verstellteil
- 11: Sperrfläche
- 12: Verriegelungseinrichtung
- 13: Verriegelungsbolzen
- 14: Entriegelungseinrichtung
- 15: Anschlagfläche
- 16: Sperrfläche
- 17: Distanzstück
- 18: lastaufnehmendes Lagerteil
- 19: zusätzliche Anschlagfläche
- 20: Lagerschenkel
- 21: Lagerschenkel
- 22: Langloch
- 23: Langloch
- 24: Vorpositionierstelle
- 25: Eingriffsteil (Rollkörper)
- 26: schräge Kante (Abweiskante)
- 27: zur Grundfläche parallele Kante
- 28: Befestigungsstelle
- 29: Schwenkachse
- 30: Führungshebel
- 31: Betätigungshebel
- 32: Vorspannfeder
- 33: Federschenkel
- 34: Federschenkel
- 35: Vorpositionierfeder
- 36: Federbauteil
- 37: Befestigungsbolzen
- 38: Befestigungsbolzen
- 39: Anschlagfläche
- 40: Anschlagfläche
- 41: Schwenkachse
- 42: Griffteil
- 43: Gleitstück
- 44: Ansatzstück
- 45: Ausnehmungen
- 46: einwärts gebogene Blechteile
- 47: Kanten
- 48: Blechschenkel

## Patentansprüche

1. Vorrichtung zur Höhenverstellung einer Sicherheitsgurtumlenk- oder -verankerungseinrichtung in einem Fahrzeug mit
- einer Führungsschiene (1), welche an einer Grundfläche (2), zwei längsverlaufende Seitenschenkel (3, 4) aufweist, deren längsverlaufende Enden umgebogen sind und auf die Grundfläche (2) zu und parallel zu den Seitenschenkeln (3, 4) verlaufende Sperrleisten (7, 8) bilden, an denen in jeweiligen Höhenpositionen im wesentlichen senkrecht zur Grundfläche verlaufende geradlinige Sperrflächen (11) in sägezahnförmigen Ausnehmungen vorgesehen sind
- einem zwischen den Sperrleisten gebildeten Längsschlitz (9);
- einem entlang dem Längsschlitz (9) verschiebbaren Verstellteil (10), an welchem die Umlenk- bzw. Verankerungseinrichtung befestigt ist;
- einer am Verstellteil (10) vorgesehenen Verriegelungseinrichtung (12) mit einem Verriegelungselement (13), das mit Vorspannung zumindest bei Belastung eine in der jeweiligen Höhenposition lösbare Verriegelungsstellung einnimmt, in welcher zumindest bei vom Sicherheitsgurt ausgehender Belastung eben ausgebildete Anschlagflächen (15) des Verriegelungselementes (13) mit den Sperrflächen (11), in Anlage kommen; und
- einer Entriegelungseinrichtung (14), durch welche die Anschlagflächen (15) an den Sperrflächen (11) während der Höhenverstellung vorbeibewegbar sind;
**dadurch gekennzeichnet, daß**
- an den Seitenschenkeln (3, 4) nach innen versetzte weitere geradlinige Sperrflächen (16) vorgesehen sind, die parallel zu und in jeweils gleichen Höhenpositionen wie die Sperrflächen (11) an den Sperrleisten (7, 8) angeordnet sind und an welche zusätzliche ebene Anschlagflächen (19) des Verriegelungselementes (13) zumindest bei Belastung in Anlage kommen.

2. Vorrichtung nach Anspruch 1, **dadurch gekennzeichnet, daß** das Verriegelungselement (13) als Verriegelungsbolzen mit im wesentlichen quadratischen oder rechteckigen Querschnitt ausgebildet ist.

3. Vorrichtung nach Anspruch 2, **dadurch gekennzeichnet, daß** am Verriegelungsbolzen (13) ein Distanzstück (17) vorgesehen ist, das sich zumindest zwischen den jeweiligen beiden innen liegenden Flächenteilen der Sperrleisten (7, 8), welche den Sperrflächen (11) benachbart sind, in der jeweiligen Höhenposition erstreckt.

4. Vorrichtung nach Anspruch 3, **dadurch gekennzeichnet, daß** das Distanzstück (17) U-förmig ausgebildet ist und den Verriegelungsbolzen (13) umfaßt.

5. Vorrichtung nach einem der Ansprüche 2 bis 4, **dadurch gekennzeichnet, daß** der Verriegelungsbolzen (13) an einem lastaufnehmenden Lagerteil (18) des Verstellteils (10) beweglich gelagert ist.

6. Vorrichtung nach Anspruch 5, **dadurch gekennzeichnet, daß** das Lagerteil (18) zwei Lagerschenkel (20, 21) aufweist, an denen der Verriegelungsbolzen (13) in an seinem Querschnitt angepaßten Langlöchern (22, 23) zwischen der Verriegelungsstellung und Entriegelungsstellung beweglich gelagert ist.

7. Vorrichtung nach Anspruch 6, **dadurch gekennzeichnet, daß** die Langlöcher (22, 23) einen gebogenen Verlauf haben.

8. Vorrichtung nach einem der Ansprüche 6 oder 7, **dadurch gekennzeichnet, daß** die beiden Lagerschenkel (20, 21) zwischen den Seitenschenkeln (3, 4) und Sperrleisten (7, 8) längsverschieblich geführt sind und in der Verriegelungsposition die den Sperrflächen (11) an den Sperrleisten (7, 8) jeweils gegenüberliegenden Anschlagflächen (15) am Verriegelungsbolzen (13) innerhalb der beiden Lagerschenkel (20, 21) und die den Sperrflächen (16) an den Seitenschenkeln (3, 4) gegenüberliegenden Anschlagflächen (19) am Verriegelungsbolzen (13) außerhalb der beiden Lagerschenkel (20, 21) liegen.

9. Vorrichtung nach einem der Ansprüche 6 bis 8, **dadurch gekennzeichnet, daß** die Verriegelungsposition und die Entriegelungsposition durch die jeweiligen Endpositionen des Verriegelungsbolzens (13) in den beiden Langlöchern (22, 23) der Lagerschenkel (20, 21) bestimmt sind.

10. Vorrichtung nach einem der Ansprüche 2 bis 9, **dadurch gekennzeichnet, daß** der Verriegelungsbolzen (13) im wesentlichen senkrecht zur Längsverschiebungsrichtung des Verstellteils (10) zwischen der Verriegelungsposition und der Endriegelungsposition beweglich gelagert ist.

11. Vorrichtung nach einem der Ansprüche 1 bis 10, **dadurch gekennzeichnet, daß** die Sperrflächen (16) an den Seitenschenkeln (3, 4) etwa die gleiche Länge besitzen, wie die Sperrflächen (11) an den Sperrleisten (7, 8).

12. Vorrichtung nach einem der Ansprüche 2 bis 11, **dadurch gekennzeichnet, daß** an zwischen den Seitenschenkeln (3, 4) und den Sperrleisten (7, 8) liegenden umgebogenen Schienenteilen (5, 6) Vorpositionierstellen (24) vorgesehen sind, durch welche das Verstellteil (10) in einer Höhenposition haltbar ist, in welcher die Anschlagflächen (15, 19) am Verriegelungsbolzen (13) in geringem Abstand zu den Sperrflächen (11, 16) an den Sperrleisten (7, 8) gehalten sind.

13. Vorrichtung nach Anspruch 12, **dadurch gekennzeichnet, daß** die Vorpositionierstellen (24) als Ausnehmungen ausgebildet sind, in die am Verstellteil (10) mit Vorspannung gelagerte Eingriffsteile (25) in der jeweiligen Höhenposition eingedrückt sind.

14. Vorrichtung nach einem der Ansprüche 5 bis 13, **dadurch gekennzeichnet, daß** das lastaufnehmende Lagerteil (18) unter hoher vom Sicherheitsgurt ausgehender Zugbelastung gegenüber einer zur Längsrichtung der Führungsschiene (1) quer verlaufende Achse kippbar ist.

## Claims

1. A device for adjusting the height of a seat belt deflection and anchoring device in a vehicle, having
a guide rail (1) which has on a base surface (2) two longitudinally extending side limbs (3, 4) the longitudinally extending ends thereof being bent around and forming blocking strips (7, 8) extending towards the base surface (2) and parallel to the side limbs (3, 4), rectilinear blocking surfaces (11) which extend substantially perpendicular to the base surface being provided at respective height positions on the blocking strips (7, 8) in sawtooth-shaped cut-outs,
a longitudinal slot (9) formed between the blocking strips;
an adjusting part (10) which is displaceable along the longitudinal slot (9) and to which the deflection and anchoring device is secured;
a locking device (12) which is provided on the adjusting part (10) and has a locking element (13) which with pre-tension, at least under load, adopts a locking position which is releasable in the respective height position and in which, at least under load from the seat belt, planar abutment faces (15) of the locking element (13) come into abutment with the blocking surfaces (11); and
an unlocking device (14) which makes it possible for the abutment faces (15) to move past the blocking surfaces (11) during the height adjustment;
**characterised in that**
further, rectilinear and inwardly offset blocking surfaces (16) are provided on the side limbs (3, 4) and are arranged on the blocking strips (7, 8) parallel to and in respectively the same height positions as the blocking surfaces (11), and additional planar abutment faces (19) of the locking element (13) come into abutment therewith, at least under load.

2. A device according to Claim 1, **characterised in that** the locking element (13) is in the form of a locking bolt of a substantially square or rectangular cross-section.

3. A device according to Claim 2, **characterised in that** a spacer (17) is provided on the locking bolt (13) and extends in the respective height position at least between the respective two inside surface parts of the blocking strips (7, 8) which are adjacent to the blocking surfaces (11).

4. A device according to Claim 3, **characterised in that** the spacer (17) is in the shape of a U and surrounds the locking bolt (13).

5. A device according to one of Claims 2 to 4, **characterised in that** the locking bolt (13) is movably supported on a load-bearing supporting part (18) of the adjusting part (10).

6. A device according to Claim 5, **characterised in that** the supporting part (18) has two supporting limbs (20, 21) on which the locking bolt (13) is supported, in elongate holes (22, 23) which are matched to its cross-section, such that it is movable between the locking position and the unlocking position.

7. A device according to Claim 6, **characterised in that** the elongate holes (22, 23) have a curved profile.

8. A device according to either of Claims 6 or 7, **characterised in that** the two supporting limbs (20, 21) are guided longitudinally displaceably between the side limbs (3, 4) and the blocking strips (7, 8), and in the locking position the abutment faces (15) on the locking bolt (13) which are respectively opposite the blocking surfaces (11) on the blocking strips (7, 8) lie within the two supporting limbs (20, 21), and the abutment faces (19) on the locking bolt (13) which are opposite the blocking surfaces (16) on the side limbs (3, 4) lie outside the two supporting limbs (20, 21).

9. A device according to one of Claims 6 to 8, **characterised in that** the locking position and the unlocking position are determined by the respective end positions of the locking bolt (13) in the two elongate holes (22, 23) in the supporting limbs (20, 21).

10. A device according to one of Claims 2 to 9, **characterised in that** the locking bolt (13) is supported substantially perpendicular to the direction of longitudinal displacement of the adjusting part (10) such that it is movable between the locking position and the unlocking position.

11. A device according to one of Claims 1 to 10, **characterised in that** the blocking surfaces (16) on the side limbs (3, 4) have approximately the same length as the blocking surfaces (11) on the blocking strips (7, 8).

12. A device according to one of Claims 2 to 11, **characterised in that** pre-positioning points (24) are provided on bent-around rail parts (5, 6) which lie between the side limbs (3, 4) and the blocking strips (7, 8), these pre-positioning points (24) making it possible to hold the adjusting part (10) in a height position in which the abutment faces (15, 19) on the locking bolt (13) are held at a slight spacing from the blocking surfaces (11, 16) on the blocking strips (7, 8).

13. A device according to Claim 12, **characterised in that** the pre-positioning points (24) are in the form of cut-outs into which engagement parts (25) supported with pre-tension on the adjusting part (10) are pressed in the respective height position.

14. A device according to one of Claims 5 to 13, **characterised in that** the load-bearing supporting part (18) may be tilted under a high tensile load from the seat belt with respect to an axis extending transversely to the longitudinal direction of the guide rail (1).

## Revendications

1. Dispositif de réglage en hauteur d'un dispositif de renvoi ou d'ancrage d'une ceinture de sécurité dans un véhicule automobile, comportant
un rail de guidage (1), comportant sur une surface de base (2) deux branches latérales à extension longitudinale (3, 4) dont les extrémités à extension longitudinale sont repliées et formant des barres de blocage (7, 8) s'étendant vers la surface de base (2) et parallèlement aux branches latérales (3, 4), comportant dans des positions de hauteur respectives des surfaces de blocage (11) rectilignes s'étendant de manière pratiquement perpendiculaire à la surface de base, dans des évidements en dents de scie ;
une fente longitudinale (9) formée entre les barres de blocage;
un élément d'ajustement (10) pouvant être déplacé par glissement le long de la fente longitudinale (9), sur lequel est fixé le dispositif de renvoi ou d'ancrage;
un dispositif de verrouillage (12) agencé sur l'élément d'ajustement (10), comportant un élément de verrouillage (13), adoptant lors d'une prétension au moins en présence d'une charge une position de verrouillage pouvant être dégagée dans la position de hauteur respective, des surfaces de butée planes (15) de l'élément de verrouillage (13) butant contre les surfaces de butée (11), au moins en présence d'une charge partant de la ceinture de sécurité; et
un dispositif de déverrouillage (14), permettant de déplacer les surfaces de butée (15) le long des surfaces de blocage (11) lors du réglage en hauteur;
**caractérisé en ce que**
les branches latérales (3, 4) comportent des surfaces de blocage rectilignes additionnelles décalées vers l'intérieur (16), agencées parallèlement aux surfaces de blocage (11) sur les barres de blocage (7, 8) et dans les positions de hauteur respectivement identiques, et contre lesquelles butent des surfaces de butée planes additionnelles (19) de l'élément de verrouillage (13), au moins en présence d'une charge.

2. Dispositif selon la revendication 1, **caractérisé en ce que** l'élément de verrouillage (13) est constitué par un boulon de verrouillage ayant une section transversale pratiquement carrée ou rectangulaire.

3. Dispositif selon la revendication 2, **caractérisé en ce que** le boulon de verrouillage (13) comporte une pièce d'écartement (17), s'étendant au moins entre les deux parties de surface internes respectives des barres de blocage (7, 8), adjacentes aux surfaces de blocage (11) dans la position de hauteur respective.

4. Dispositif selon la revendication 3, **caractérisé en ce que** la pièce d'écartement (17) a une forme en U et comprend le boulon de verrouillage (13).

5. Dispositif selon l'une des revendications 2 à 4, **caractérisé en ce que** le boulon de verrouillage est agencé de manière mobile sur une partie de support à support de charge (18) de l'élément d'ajustement (10).

6. Dispositif selon la revendication 5, **caractérisé en ce que** la partie de support (18) comporte deux branches de support (20, 21), sur lesquelles le boulon de verrouillage (13) est agencé dans des trous oblongs (22, 23) adaptés à sa section transversale, de sorte à pouvoir se déplacer entre la position de verrouillage et la position de déverrouillage.

7. Dispositif selon la revendication 6, **caractérisé en ce que** les trous oblongs (22, 23) s'étendent de manière courbée.

8. Dispositif selon l'une des revendications 6 ou 7, **caractérisé en ce que** les deux branches de support (20, 21) sont guidées de sorte à pouvoir se déplacer dans la direction de la longueur entre les branches latérales (3, 4) et les barres de blocage (7, 8), les surfaces de butée (15) sur le boulon de verrouillage (13) respectivement opposées aux surfaces de blocage (11) sur les barres de blocage (7, 8) dans la position de verrouillage étant agencées à l'intérieur des deux branches de support (20, 21), les surfaces de butée (19) sur le boulon de verrouillage (13) étant agencées à l'extérieur des deux branches de support (20, 21).

9. Dispositif selon l'une des revendications 6 à 8, **caractérisé en ce que** la position de verrouillage et la position de déverrouillage sont déterminées par les positions d'extrémité respectives du boulon de verrouillage (13) dans les deux trous oblongs (22, 23) des branches de support (20, 21).

10. Dispositif selon l'une des revendications 2 à 9, **caractérisé en ce que** le boulon de verrouillage (13) est agencé de manière pratiquement perpendiculaire à la direction du déplacement longitudinal de l'élément d'ajustement (10) de sorte à pouvoir se déplacer entre la position de verrouillage et la position de déverrouillage.

11. Dispositif selon l'une des revendications 1 à 10, **caractérisé en ce que** les surfaces de blocage (16) au niveau des branches latérales (3, 4) ont pratiquement la même longueur que les surfaces de blocage (11) sur les barres de blocage (7, 8).

12. Dispositif selon l'une des revendications 2 à 11, **caractérisé en ce que** des parties de rail repliées (5, 6) agencées entre les branches latérales (3, 4) et les barres de blocage (7, 8) comportent des points de prépositionnement (24), permettant de retenir l'élément d'ajustement (10) dans une position de hauteur, dans laquelle les surfaces de butée (15, 19) sur le boulon de verrouillage (13) sont retenues sur les barres de blocage (7, 8) à une faible distance des surfaces de blocage (11, 16).

13. Dispositif selon la revendication 12, **caractérisé en ce que** les points de prépositionnement (24) sont constitués par des évidements, dans lesquels les éléments d'engagement (25) agencés par prétension sur l'élément d'ajustement (10) sont enfoncés dans la position de hauteur correspondante.

14. Dispositif selon l'une des revendications 5 à 13, **caractérisé en ce que** la partie de support à support de charge (18) peut être basculée par rapport à un axe transversal à la direction longitudinale du rail de guidage (1) en présence d'une charge de traction élevée partant de la ceinture de sécurité.
